# EUROPEAN PATENT APPLICATION

(11) **EP 4 163 205 A1**
(43) Date of publication of application: **12.04.2023**
(21) Application number: 21200997.1
(22) Date of filing: 05.10.2021
(51) Int. Cl.: B64D 9/00, B64F 1/32, B64C 1/20, B65D 88/14, B65D 90/18

(54) **MOVABLE CARGO TRANSPORT PLATFORM FOR BEING RECEIVED IN AN AIRCRAFT CARGO HOLD OR CABIN HAVING SEPARATELY STEERABLE WHEEL ASSEMBLIES AND CARGO TRANSPORT SYSTEM**

(71) Applicant: Airbus Operations GmbH, 21129 Hamburg (DE)
(72) Inventor: Schliwa, Ralf, 21129 Hamburg (DE); Grabow, Thomas, 21129 Hamburg (DE); Benthien, Hermann, 21129 Hamburg (DE); Poppe, Andreas, 21129 Hamburg (DE)
(74) Representative: Bird & Bird LLP

(57) **Abstract**

The present invention relates to a cargo transport platform for being received in an aircraft cargo hold (7) or cabin (5) comprising a base member (13) having an upper surface (15) configured to support cargo elements and a lower surface (29) adapted to face a floor surface of the cargo hold (7) or cabin (5), a plurality of steerable wheel devices (31) supported in the base member (13) and adapted to allow the platform (11) to slide on the floor surface (23), wherein each of the plurality of steerable wheel devices (31) comprises a carrier (33) and a wheel assembly (35), each wheel assembly (35) comprising at least one wheel (37, 39) which is rotatably supported in the carrier (33) about a wheel axis (41) and arranged such that it projects beyond the lower surface (29), wherein for each of the steerable wheel devices (31) a steering axis(43) is defined about which the carrier (33) of said steerable wheel device (31) my rotate relative to the base member (13), each steering axis (43) extending vertically relative to the floor surface (23), wherein each steerable wheel device (31) comprises a drive assembly (59, 61) wherein the drive assembly (59, 61) is adapted to rotate the carrier (33) of said steerable wheel device (31) about its steering axis (43) and to rotatingly drive the at least one wheel (37, 39) of the wheel assembly (35) of said steerable wheel device (31) about its wheel axis, and a control unit connected to each of the drive devices assemblies and adapted to provide control signals to the drive devices assembly so as to effect movement of the platform along a predetermined path.

## Description

The present invention relates to a cargo transport platform and a cargo transport system for being received in an aircraft cargo hold or cabin and a method for operating such platform.

Such platforms and systems are generally known from the prior art such as the from DE 10 2020 110 598 A1. These containers comprise a preferably stiff base member having an upper surface which is adapted to receive cargo.

In this context cargo in the sense of the present invention is to be understood broadly and includes both luggage and heavy cargo elements which are usually received within the cargo hold of an aircraft. Moreover, in the present case the containers in accordance with the present invention are dimensioned such that they are capable to be passed through both the doors to the passenger cabin and the cargo hold. In particular, the term container in the sense of the present invention must not be construed in such a narrow sense so as to cover only those containers which are normally received in the cargo hold of an aircraft.

That the containers of the present invention shall also be capable of being received in the cabin of an aircraft is driven by the fact that it has recently turned out that a more flexible use of an aircraft is desirable where at least parts of the cabin can be converted into cargo space by removing the respective seats, when the complete capacity for passengers is not required. In those cases, the space in the cabin no longer required for passengers can be used for cargo so that the overall cost efficiency may still be kept at a higher level, even though a lower number of passengers are carried by the aircraft.

Since it is intended that the containers of the present invention are adapted such that they may be received both in the cargo hold and in the cabin, specific measures need to be taken to allow for the containers to be slid along the floor surface of both the cargo hold and the cabin. In particular, in case of the latter it is to be considered that the maximum pointloads which can be applied to the cabin floor are limited and much smaller than in case of the floor of the cargo hold. Furthermore, whereas normally special means are provided or are installed within the cargo hold that allow for a driven and controlled movement of the containers within the hold, this is not the case in the cabin. Hence, it is required to provide means on the base member of the containers that allow for an easy shifting of the containers on the floor surface of the cabin. In particular, it is desirable that the containers may either manually be shifted within the cabin or comprise means that allow for a driven movement. Furthermore, since the containers may have a considerable weight and have to be placed at precisely defined positions, it is also desirable that the assemblies for allowing the containers to be slidable are configured such that they also allow for the precise steering of the containers.

Therefore, it is the object of the present invention to provide a cargo container adapted to be capable of being received on floors having reduced maximum pointloads which can be applied to them without being damaged, wherein the cargo container is also capable of being maneuvered over such floor surfaces in a steerable manner, as well as a method to operate such cargo container tubing maneuvered over floor surfaces.

This object is achieved by a cargo transport platform for being received in an aircraft cargo hold or cabin comprising:
a base member having an upper surface configured to support cargo elements and a lower surface adapted to face a floor surface of the cargo hold or cabin,
a plurality of steerable wheel devices supported in the base member and adapted to allow the platform to slide on the floor surface,
wherein each of the plurality of steerable wheel devices comprises a carrier and a wheel assembly, each wheel assembly comprising at least one wheel which is rotatably supported in the carrier about a wheel axis and arranged such that it projects beyond the lower surface,
wherein for each of the steerable wheel devices a steering axis is defined about which the carrier of said steerable wheel device my rotate relative to the base member, each steering axis extending vertically relative to the floor surface,
wherein each steerable wheel device comprises a drive assembly wherein the drive assembly is adapted
to rotate the carrier of said steerable wheel device about its steering axis and
to rotatingly drive the at least one wheel of the wheel assembly of said steerable wheel device about its wheel axis, and
a control unit connected to each of the drive assemblies and adapted to provide control signals to the drive assembly so as to effect movement of the platform along a predetermined path.

The cargo transport platform according to the present invention comprises a base member which is provided with an upper surface configured to support cargo elements and a lower surface which is adapted to face a floor surface of the cargo hold or cabin in which the cargo transport platform is received. The upper surface is configured to support cargo elements and the term "cargo elements" in the sense of the present invention is to be construed broadly, i.e., it covers both cargo such as luggage or smaller members usually received in a container and large components. Therefore even a support member being provided with a housing so that a receiving space is defined which is capable of receiving smaller cargo members, may be supported on the base member in the sense of the present invention. In particular the base element of a cargo container may be supported onthe base member of the platform.

Further, according to the present invention the base member and in particular its lower surface is provided with a plurality of steerable wheel devices which comprise a carrier and a wheel assembly. The wheel assembly comprises at least one wheel which is rotatably supported by the carrier so that it may rotate about a wheel axis that extends parallel to the plane in which the floor extends on which the platform may rest. Further, the wheels of the steerable wheel devices project beyond the lower surface of the base member so that they may get in contact with the floor with a gap between the base member and the floor. Moreover, the steerable wheel devices are configured such that for each wheel device a steering axis is defined about which the carrier may rotate relative to the base member, the steering axes extending vertically with respect to the floor and the plane in which the contact points of the wheels with the floor are located. Hence each of the wheel assemblies is adjustable so that the wheel axis may be positioned in any desired direction.

Each of the steerable wheel devices is provided with a drive assembly that is adapted such that it may rotate the carrier relative to the base member about its steering axis. In addition, the drive assembly is also adapted to rotatingly drive the wheels of the wheel assembly. Therefore, each of the steerable wheel devices is driven in two ways. Firstly, the wheels are rotatably driven and secondly the rotational position of the wheel axis and hence the direction in which the respective steerable wheel device propels the transport platform is also adjusted with the drive assembly. That means that each of the steerable wheel devices can independently be controlled so as to the direction and the velocity with which the respective device is propelled. This allows the entire platform to be freely maneuvered, i.e., it may be driven along linear and accurate paths and may even be a rotated on a spot. Thus, by providing the platform with a plurality of these steerable wheel devices, the platform can flexibly be positioned within the cabin or cargo hold of an aircraft. Furthermore, since the platform is provided with a plurality of such devices the entire load due to the weight of the platform is distributed over several points so that the maximum pointload is kept at a low level.

To enable such controlled precise movement the cargo transport platform according to the present invention is provided with a control unit which is connected to each of the drive assemblies so that control signals to these assemblies are provided to effect a movement of the entire platform along a predetermined path such as a path defined by the input of a user.

In a preferred embodiment the wheel assembly of each steerable wheel device comprises a first and a second wheel being rotatably supported in the carrier of said steerable wheel device about its wheel axis, wherein the drive assembly of each of the steerable wheel devices comprises a first rotary drive coupled to the first wheel and a second rotary drive coupled to the second wheel, and wherein the control unit is connected to the drive assembly such that the first and second rotary drives are operable in such a way that the rotational direction and rotational speed of each of the first and second wheels of each steerable wheel device can be controlled independently. Such configuration of the wheel assembly allows to adjust the angular position of the wheel axis simply by controlling the rotary drives such that the wheels are driven with different rotational speeds or in different directions which results in a change of the angular position of the wheel axis. Hence, such arrangement results in a mechanically simple configuration of the steerable wheel devices. This is particularly the case, when in a further preferred embodiment the first and the second rotary drives of each of the steerable wheel devices are formed as a hub drive.

In another preferred embodiment the drive assembly of each of the steerable wheel devices comprises a steering drive coupled to the base member and the carrier of said steerable wheel device and adapted to rotate said carrier about its steering axis.

In another the preferred embodiment, in addition or as an alternative to the wheel assembly with at least two driven wheels, the drive assembly of each of the steerable wheel devices comprises a steering drive coupled to the base member and the carrier of said steerable wheel device and adapted to rotate said carrier about its vertical axis. In such arrangement the steerable wheel devices and the wheel axis of the associated wheel assembly can be adjusted by rotating the carrier relative to the base member by means of a drive device coupled between them. In particular, the steering drive maybe formed as step motor.

In a further preferred embodiment in of each of the steerable wheel devices a sensor assembly is provided which is adapted to detect the position of the carrier of said steerable wheel device relative to the base member and/or the rotational position of the at least one wheel of the wheel assembly of said steerable wheel device and/or the rotational speed of the at least one wheel of the wheel assembly of said steerable wheel device , and wherein the sensor assembly of each of the steerable wheel devices is connected to the control unit and capable of transmitting a signal to the control unit representing the position of the carrier of said steerable wheel device relative to the base member and/or the rotational position of the at least one wheel of the wheel assembly of said steerable wheel device and/or the rotational speed of the at least one wheel of the wheel assembly of said steerable wheel device. Such a sensor assembly allows to provide a feedback signal to the control unit which further facilitates that the control unit effects a precise movement of the cargo transport platform within the cabin or the cargo hold of an aircraft.

In another preferred embodiment, a battery pack is provided, which is preferably releasably mounted on the base member, wherein the drive assembly of each of the steerable wheel devices is coupled to the battery pack and adapted to be supplied by the battery pack. Such battery pack allows to supply power to the components of the drive assembly.

Furthermore, it is preferred when the carrier of each of the steerable wheel devices is moveable relative to the base member parallel to the steering axis of said steerable wheel device between an extended position in which the at least one wheel of said steerable wheel device extends beyond the lower surface and a retracted position in which the at least one wheel of said steerable wheel device is retracted behind the lower surface. When the steerable wheel devices are height-adjustable in such a manner that the wheel can be retracted behind the lower surface, the entire cargo transport platform may be lowered in such a manner to the floor surface that the lower surface get into contact with the floor surface so as to prevent a sliding movement of the platform relative to the floor.

In another preferred embodiment each of the steerable wheel devices comprises a dampening element which is arranged between the base member and the carrier of said steerable wheel device, wherein the dampening element of said steerable wheel device is arranged such between the base member and the carrier, that it allows for a limited movement of the carrier relative to the base member parallel to the vertical axis of said steerable wheel device. Such a dampening element reduces the vibrations which are generated when the cargo transport platform according to the present invention is moved across a floor of a cabin or cargo hold. In addition, when each of the carriers of the steerable wheel devices are supported by a dampening element the rotational movement of the carriers relative to the base element is further facilitated, as the entire configuration with the plurality of wheel assemblies is more flexible.

In a further preferred embodiment the cargo transport platform comprises a position sensor such as a GPS sensor which is connected to the control unit and adapted to provide a signal representing the actual position of the platform to the control unit. Providing such a sensor facilitates that the platform of the present invention may autonomously determine and control the path along which it is moved to a predetermined position in the cabin or cargo hold.

It is also preferred when a user interface is provided adapted to receive an input from a user specifying a target position and/or the predetermined path and/or a direction along which the platform is to be moved by the steerable wheel devices. Such user interface may be in the form of an actuator or a touchscreen etc.

In another aspect of the present invention a cargo transport system is provided for being received in an aircraft cargo hold or cabin comprising
at least one cargo transport platform according to one or more of the aforementioned embodiments and
a support member having a support surface wherein the at least one cargo transport platform is connected to the support member, wherein the support member being configured such that when the at least one wheel of the steerable wheel devices of the at least one cargo transport platform are positioned on a floor surface of an aircraft cargo hold or cabin, the support surface may support cargo.

In such cargo transport system the platform may preferably releasably be connected to the support member so that it is facilitated that the platform is employed to transfer the support member to a predetermined position, is then disconnected from the support member and again coupled to another support member so as to move the latter to another position. Hence, it is no longer required that each container or cargo support member is provided with its own drive means. Instead, the system of the present invention allows to employ a small number of transport platforms releasably coupled to support members to maneuver the latter in a cargo hold or cabin of an aircraft. In particular, this aspect provides for a modular configuration which saves further weight since the platforms employed for moving the support members with the cargo, do not have to be carried with the aircraft during flight. It is only required that also at the destination cargo transport platforms are available so as to again unload the support members from the cabin or cargo hold at the destination.

In a preferred embodiment the base member of the at least one cargo transport platform is connected to the support member such, that the base member and the support member are integrally formed. Hence, it is also within the scope of the present invention that the base member and the support member are formed in one piece.

Finally, the above object is achieved by a method of operating a cargo transport platform of one or more of the above embodiments, comprising the following steps:
a) providing a control command to the control unit;
b) determining a predetermined path to be followed by the cargo transport platform based on the control command by the control unit;
c) determining a rotational position of the carrier and the velocity of the at least one wheel of each of the steerable wheel devices by the control unit to obtain movement of the cargo transport platform along the predetermined path;
d) providing control signals to the drive assemblies of each of the steerable wheel devices corresponding to the rotational position and the velocity determined in step d) by the control unit; and
e) operating the drive assemblies of each of the steerable wheel devices based on the control signals provided in step d).

According to the method of the present invention, a cargo transport platform and a cargo container comprising such platform, respectively, are operated such that a control command is provided to the control unit, the control command comprising information as to the path or the final end position the cargo transport platform shall obtain. Based on this, a predetermined path along which the platform shall move, is determined by the control unit. This also covers that the control unit independently determines the path along which the cargo transport platform moves to an end position input in the control unit by the command. Further, the input may be performed directly by a user via a user interface or is sent to the control unit via a wireless or wired connection.

Hence, the method is not limited to control commands being directly input by a user. The control unit then determines for each of the steerable wheel devices of the cargo transport platform at which angular position the respective carrier has to be adjusted and at which velocity the wheels have to be driven to follow the predetermined path determined before. Further, the control unit provides corresponding control signals to the drive assemblies of each of the steerable wheel devices so that respective rotational positions and velocities are achieved by the respective steerable wheel devices. Hence according to this aspect of the present invention the control unit is capable of controlling the plurality of steerable wheel devices so as to achieve that the cargo transport platform is moved along the desired direction or to the final end position as input in the control unit.

In a preferred embodiment of this method the wheel assembly of each steerable wheel device comprises a first and a second wheel being rotatably supported in the carrier of said steerable wheel device about its wheel axis, wherein the drive assembly of each of the steerable wheel devices comprises a first rotary drive coupled to the first wheel and a second rotary drive coupled to the second wheel, and wherein the control unit is connected to the drive device such that the first and second rotary drives are operable in such a way that the rotational direction and rotational speed of each of the first and second wheels of each steerable wheel device can be controlled independently. In this case in above step d) the control signals are provided by the control unit to the first and the second rotary drive of each of the steerable wheel devices; and in the above step e) the first and the second rotary drives of each of the steerable wheel devices are operated based on the control signals provided in step d). Therefore, this preferred embodiment of a method of the present invention allows to operate steerable wheel devices having first and second wheels being independently driven by first and second rotary drives.

In the following preferred embodiment of the present invention are discussed with respect to a drawing.
- Figure 1: shows an aircraft in the cabin and the cargo hold of which embodiments of a cargo transport platform or system of the present invention may be received;
- Figure 2: shows a cross-sectional view of an embodiment of a cargo transport system according to the present invention;
- Figure 3: shows a top view of the embodiment of figure 2 with a lever in a first position;
- Figure 4: shows another top view of the embodiment of figure 2 with the lever in the second position;
- Figure 5: shows an exploded cross-sectional view of the embodiment of figure 2;
- Figure 6: shows an enlarged view of the steerable wheel device of the embodiment of figure 2;
- Figure 7: shows a bottom view of a second embodiment of a cargo transport platform according to the present invention;
- Figure 8: shows an arrangement of embodiments of figure 7 on the bottom surface of a cargo container; and
- Figure 9: shows the steps of a method of operating the embodiment of the cargo container shown in figures 1 to 6.

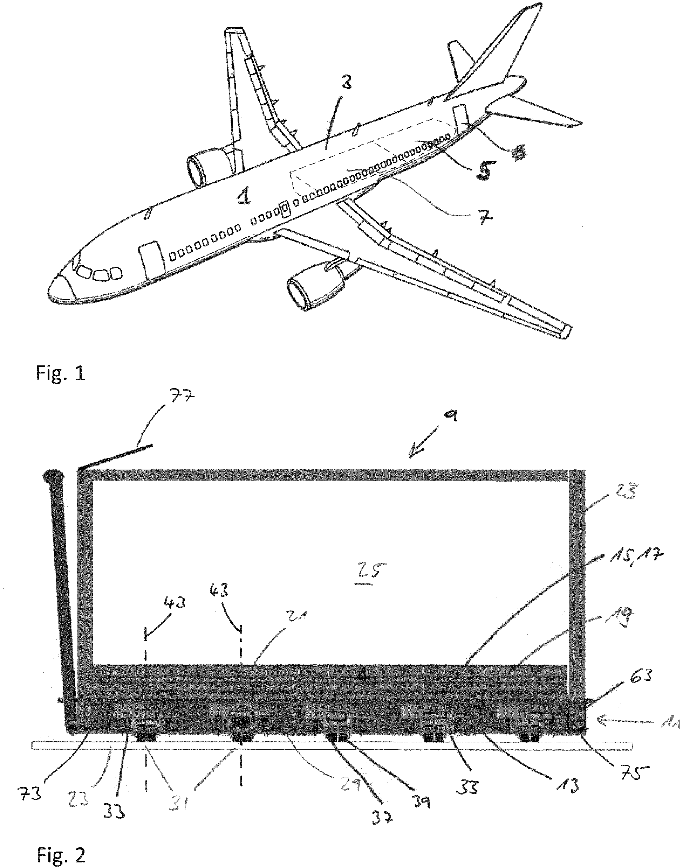

As can be seen in figure 1 an aircraft 1 usually comprises a fuselage 3 having a passenger cabin 5 as well as a cargo hold 7 below the cabin 5. It is desirable that cargo containers are not only stored within the cargo hold 7 but that also the passenger cabin 5 of the aircraft 1 may be used for such purpose after having removed at least part of the seat rows in the cabin. Therefore, the embodiments of cargo containers 9 as described below will have to be dimensioned such that they are able pass both the passenger door and a cargo door (not shown).

Furthermore, since at least the passenger cabin 5 is normally not provided with any means on its the floor surface to enable transport of cargo containers, it is required that these cargo containers 9 are provided with specific means so as to facilitate movement or shifting of the containers 9 along the floor surface of the passenger cabin 5, either autonomously or by personnel. In particular, the cargo containers 9 need to be adapted such that they may precisely be positioned adjacent to each other on the floor surface both of the passenger cabin 5 and of the cargo hold 7 which in turn requires that the containers are provided with means to allow for precise steering of the movement.

As can be seen in figures 2 to 6 a first embodiment of a cargo container 9 according to the present invention comprises cargo transport platform 11 having a base member 13 with an upper surface 15 which is adapted to be releasably coupled with the bottom surface 17 of a support member 19. The support member 19 additionally comprises a support surface 21 which points away from the bottom surface 17 and is arranged such that when the support member 19 is coupled to the cargo transport platform 11 and the latter is positioned on a horizontally extending floor 23, it points upwards so that it is capable of supporting cargo elements. In this preferred embodiment the support member 19 is additionally provided with a casing 23 which encompasses a receiving space 25 in which cargo elements may be received. However, it is also conceivable and within the scope of the present invention that the support member 19 does not comprise such casing.

In this regard it is to be noted that the term "cargo elements" in the sense of the present invention is to be construed broadly so that it covers any kind of cargo that may be transported by an aircraft independent of its size of the weight, i.e., it covers luggage as well as heavy cargo elements normally received in a cargo hold.

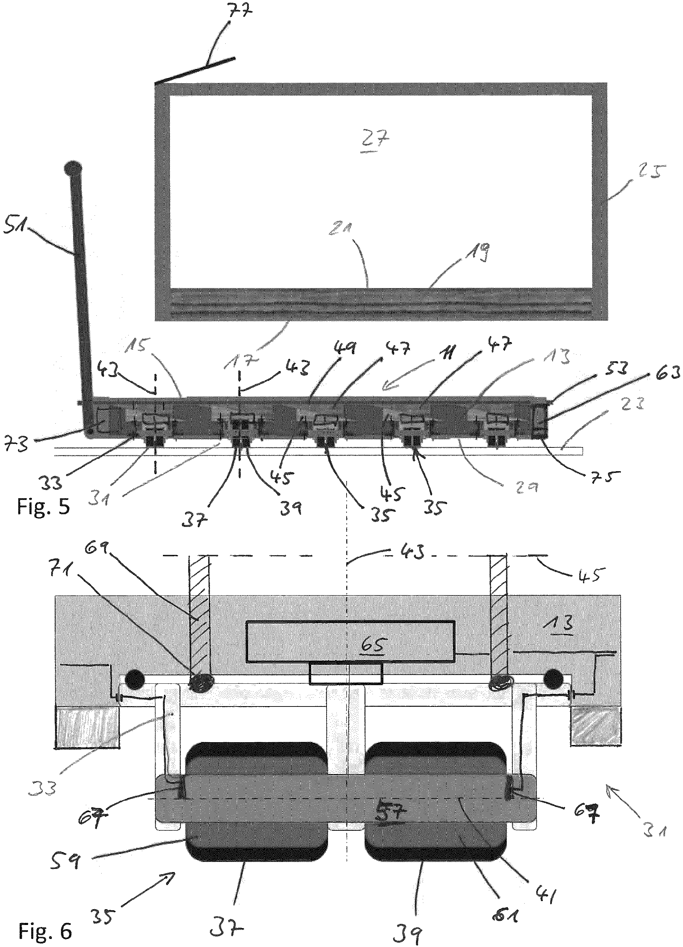

In addition, the base member 13 comprises a lower surface 29 which during normal use points towards the floor surface 23 of the passenger cabin 5 or the cargo hold 7. As can further be seen in figures 2 and 5, the lower surface 29 of the base member 13 is provided with a plurality of steerable wheel devices 31 examples of which will be described in detail below and which comprise a carrier 33 and a wheel assembly 35. In the first and second preferred embodiments described in the following the wheel assemblies 35 comprise first and second wheels 37, 39 which are separated from each other but arranged in parallel so as to be independently rotatable with respect to a wheel axis 41. In each steerable wheel device 31 the wheel assembly 35 is mounted on the carrier 33 with the wheel axis 41 being fixed relative to the carrier 33. The carrier 33 of each of the steerable wheel devices 31 is rotatably supported in the base member 13 of the cargo transport platform 11 about a steering axis 43 which extends perpendicularly to the lower surface 29 and vertically to the floor surface 23.

As can further be seen in figures 2 and 5, in this first embodiment of a cargo transport platform 11 the carriers 33 of each of the steerable wheel devices 31 are provided with a wedge member 45 which engages with a further wedge member 47 fixedly mounted on one of a plurality of parallel rods 49 that extend through the base member 13 and are coupled to a lever 51 pivotably mounted on the base member 13. By pivoting the lever 51 the rods 49 arranged in parallel are shifted so that the wedge members 47 mounted on the rods 49 slide along the wedge members 45 fixed to the carriers 33 and the carriers 33 are retracted into or pushed out of the base member 13 depending on the pivot position of the lever 51. Thus, the carriers 33 are movable between a retracted position in which the wheels 37, 39 of the wheel assemblies 35 do not project beyond the lower surface 29 of the base member 13, and an extended position (see figure 2) where the wheels 37, 39 of the wheel assemblies 35 project beyond the lower surface 29 and may get in contact with the respective floor surface 23.

Thus, the carrier 33 of each of the steerable wheel devices 31 is movable relative to the base member 13 parallel to the respective steering axis 43 between an extended position and a retracted position.

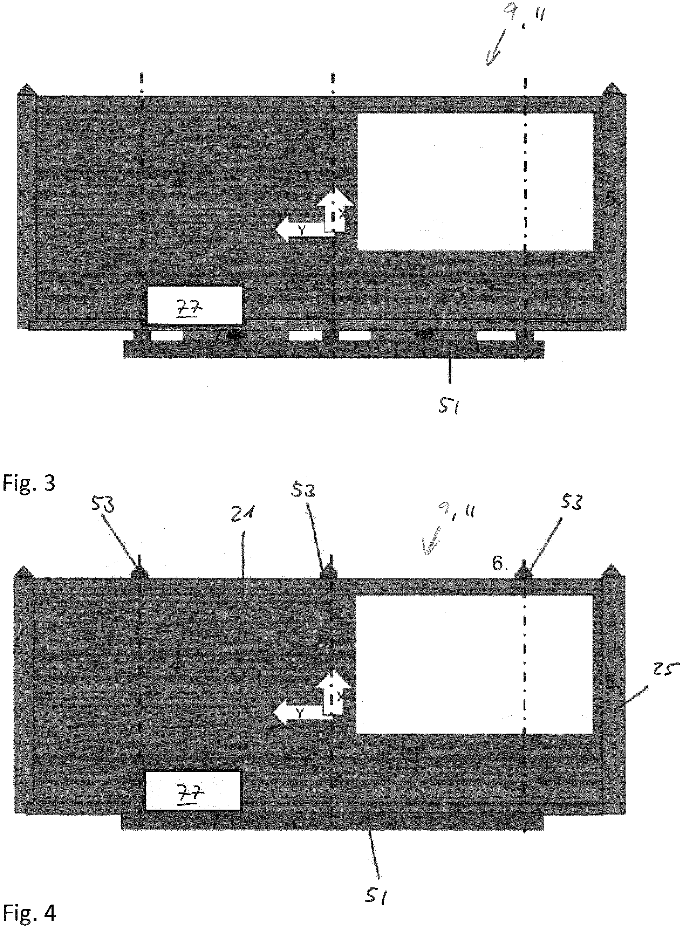

Moreover, as can be seen in figures 3 and 4, the distal end 53 of each of the rod 49 extends beyond the front end 55 of the base member 13 of the cargo transport platform 11, when the lever 51 is pivoted towards the base member 13 into that position in which the carriers 33 are in the retracted position (see figure 4). The distal ends 53 extending beyond the front end 55 of the base member 13, may engage with recesses in an adjacent cargo transport platform 11 such that the cargo transport platforms 11 are locked with each other.

In the following the configuration of the plurality of steerable wheel devices 31 on the lower surface 29 of the base member 13 will be discussed in detail with respect to figures 6.

The carrier 33 supports a shaft 57 which defines the wheel axis 41 and on which the first and the second wheels 37, 39 are rotatably supported, so that they may independently rotate. The first and the second wheels 37, 39 are mounted on the shaft 57 by a hub drive so that the first wheel 37 is mounted on the shaft 57 by a first hub drive 59 and the second wheel 39 by a second hub drive 61. With this arrangement that the first and the second wheels 37, 39 may independently be rotationally driven. In particular, the first and the second wheels 37, 39 may be driven in opposite rotational directions. When this is the case the wheel axis 41 is rotated about the steering axis 43. Hence, the first and the second hub drives 59, 61 form first and second rotary drives which in combination form a drive assembly that is capable to rotate the carrier 33 relative to the base member 13 about the associated steering axis 43. In addition, the first and the second hub drives 59, 61 drive the first and the second wheels 37, 39, respectively, about the wheel axis 41.

To this end the first and the second hub drives 59, 61 are connected to a control unit 63 mounted on the base member 13 of the cargo transport platform 11, so that the drive assembly formed by the first and the second hub drives 59, 61 of each of the steerable wheel devices 31 may centrally be controlled. In particular, the control unit 63 is coupled to each of the hub drives 59, 61 of each of the steerable wheel devices 31.

In this embodiment the drive assembly is formed by the two hub drives 59, 61 which also effect the rotation of the carrier 33 about the steering axis 43, i.e., the carrier 33 is not directly driven about the steering axis 43. It is conceivable though that a steering drive is provided which is coupled to the base member 13 and the carrier 33, so as to effect rotation of the carrier 33 about the steering axis 43. Such steering drive may be formed as a step motor.

Moreover, as shown in the figure 6, each of the steerable wheel devices 31 of this embodiment comprises a first sensor element 65 that is adapted to detect the rotational position of the carrier 33 relative to the base element 13. Moreover, second sensor elements 67 are provided that are configured such that they are capable of detecting the rotational position and the rotational speed of the first and the second wheels 37, 39. Hence, each of the steerable wheel devices 31 is provided with a sensor assembly comprising the first and the second sensor elements 65, 67 so that the position of the carrier 33 relative to the base member 13 as well as the rotational position of the wheels 37, 39 and in the rotational speed and thereof can be detected. This the sensor assembly is connected to the control unit 63 via connection lines so that the control unit 63 is supplied with signals relating to both the position of the carrier 33 and the wheels 37, 39.

As can be seen in figure 6 that in this embodiment the carrier 33 is coupled to the wedge member 45 which in turn engages with a wedge member 47 on one of the rods 49 via connectors 69 that extend through the base member 13. With this arrangement it is achieved that the movement of the rods 49 within the base member 13 indeed effect the movement of the carrier 33 relative to the base member 13. Between the connectors 69 and the carrier 33 dampening elements 71 are provided so that they is arranged between the carrier 33 and the base member 13 and allow for a limited movement of the carrier 33 relative to the base member 13 parallel to the vertical or steering axis 43. Hence, the dampening elements 71 dampen vibrations generated when the cargo transport platform 11 slides e.g. across the floor 23 of the cargo hold or cabin of an aircraft 1.

Moreover, the transfer platform 11 is provided with a releasably mounted battery pack 73 which is connected with the first and second hub drives 59, 61 and the control unit 63 so as to supply them with power. The battery pack 73 is preferably releasably mounted so that it can easily be exchanged.

In order to determine the actual position the cargo transport platform 11 has the control unit 63 is provided with a position sensor in the form of GPS sensors 75 that provides a signal representing the actual position of the platform to the control unit 63.

Finally, in order to allow for a user to input e.g., the desired target position the cargo transport platform 11 shall move to or steering commands, a user interface 77 is provided which in this preferred embodiment is mounted on the casing 25 of the support member 19. The user interface 77 is connected with the control unit 63. Since in this case the user interface 77 is connected to the support member 19 which is releasably mounted on the cargo transport platform 11, the user interface 77 is connected to the control unit 63 by means of a wireless connection. In case the user interface 77 is directly connected to the platform a wired connection can be employed.

The embodiment of a cargo container 9 shown in figures 2 to 6 can be operated as follows wherein it is also referred to the figure 11 depicting the steps of a corresponding method of operating the cargo transport platform 11 of the container.

Initially, the cargo transport platform 11 and that the support member 19 are coupled with each other and cargo elements (not shown in the drawings) are positioned on the support surface 21 within the receiving space 25 defined by the casing 25. The container 9 may be transferred into the cabin 5 or the cargo hold 7 of the aircraft 1.

Then a user may input either direct control commands into the user interface 77, such as steering commands or a desired position to which the cargo container 9 shall be moved within the cabin 5 or the cargo hold 7 (step A). In this regard is to be noted that it is also within the scope of the present invention that the respective commands are input into the control unit 63 on a different way such as a wireless connection. Hence, the present invention is not limited to inputting the commands via a user interface.

Based on the commands input to the control unit 63 it determines the predetermined path, i.e., the direction in which the cargo transport platform 11 is to be moved or the path how to reach the final position determined by the input (step B).

Based on the evaluation in step B, the control unit 63 determines for each of the steerable wheel devices 31 the rotational positions of the carriers 33 and the required velocities, with which the wheels 37, 39 are to be driven, in order to obtain that the cargo transport platform 11 is moved along the desired predetermined path resulting from the input of the user into the user interface 77 (step C).

In particular, the control unit 63 determines for each of the steerable wheel devices 31 the required rotational position of the carrier 33 and the velocity with which it shall move. Based on this it provides control signals to the first and second hub drives 59, 61 so that the respective carrier 33 is rotated into the desired position and then moved along the desired direction.

Hence, based on the steering commands or the desired position, e.g. input by a user into the user interface 77, a path is determined by the control unit 63 along which the cargo transport platform 11 shall be moved. Based on this path the control unit 63 conducts the aforementioned step for each of the steerable wheel devices 31, i.e., it determines the rotational position of the carrier 33 as well as the required velocity along the resulting direction.

In the following the control unit 63 provides corresponding control signals to the first and second hub drives 59, 61 of each of the steerable wheel devices 31 (step D). Based on these control signals the hub drives 59, 61 are operated such that the rotational position of the carriers 33 as well as the required velocities are indeed obtained (step E) wherein the sensor elements 65, 67 are used to provide feedback signals to the control unit 63 so as to enable a complete control process for each of the steerable wheel devices 31.

Therefore, with this embodiment of a control method the control unit 63 effects that the cargo transport platform is actually moved along the predetermined path initially determined by the user input or other input.

Such predetermined path may also encompass that the user simply wishes that the cargo transport platform 11 is turned around at the position where it is actually located. In such case the control unit 63 effects that by correspondingly controlling the hub drives 59, 61 of the individual wheels 37, 39 of each of the steerable wheel devices 31 that the carriers 33 are aligned and the wheels 37, 39 are driven such that the required turn is conducted. Furthermore, it is also within the scope of the present invention that the final position the cargo transport platform shall reach is input either directly by a user or by means of a wireless connection into in the control unit and the control unit autonomously determines the predetermined path along which the platform 11 is moved. This also includes that at an intermediate position before reaching the final position the control unit changes the predetermined path so as to consider obstacles or the like. In order to determine whether the final position as input has indeed been reached, the GPS sensor 75 may be used for control purposes.

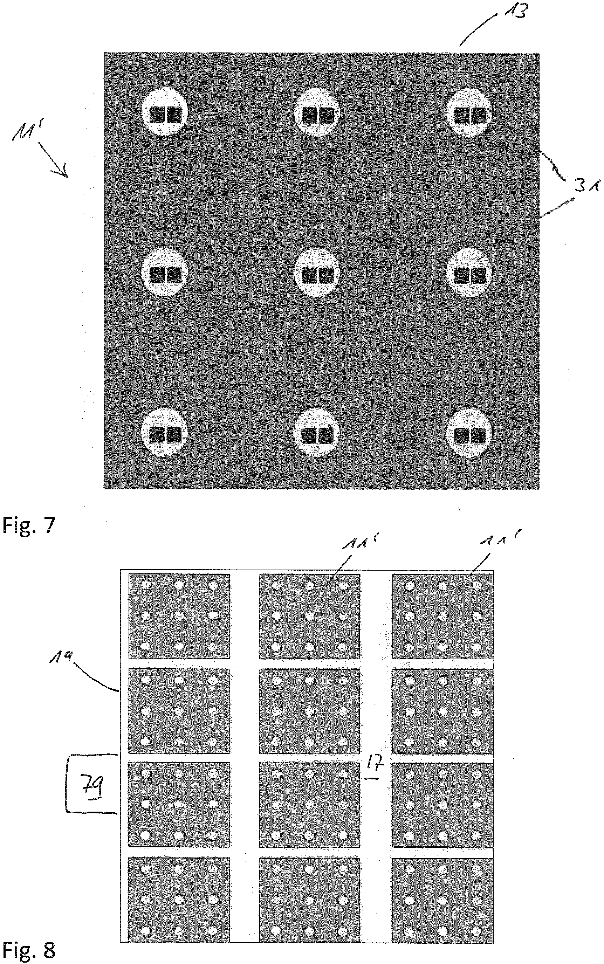

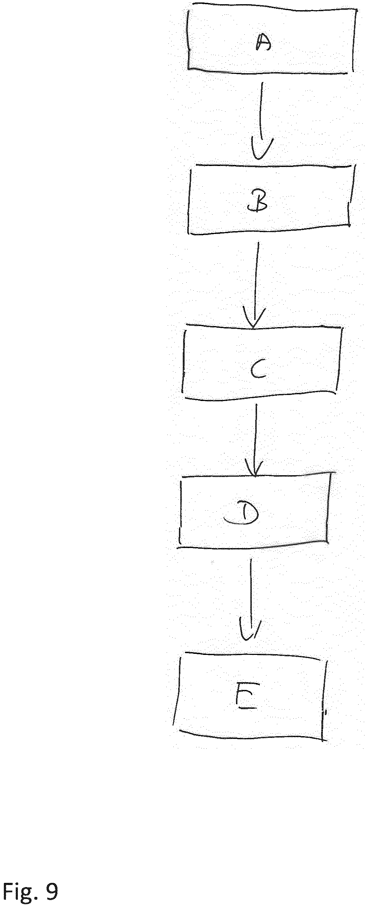

In the figures 7 and 8 another embodiment of a cargo transfer platform 11' is schematically shown which at its lower surface 29 also comprises a plurality of steerable wheel devices 31 being configured in the same manner as depicted in figure 6. Similar to the aforementioned embodiment, the steerable wheel devices 31 and the first and second hub drives 59, 61, respectively, are connected to a control unit 63 mounted on the base member and 13 of the cargo transport platform 11'. As shown in figure 8, a plurality of the cargo transport platforms 11' can be mounted on the lower surface 17 of the support member 19 of a cargo container (not shown in figures 7 and 8) with the control unit 63 of each of the cargo transport platforms 11' being connected to a central unit 79 mounted on the support member 19. The central unit 79 is adapted to receive an input as to the direction or final position the container with the support member 19 shall obtain. Based on this input the central unit 79 determines for each of the cargo transport platforms 11' the direction along which it shall remove and based on this individual direction, an input signal to the respective control unit 63 of each of the cargo transport platforms 11', this input signal being the input for the individual control unit 63 of the platforms 11'. Based on this input signal the control unit 63 of the individual cargo transport platforms 11' operate as explained in relation to the first embodiment, i.e., the control unit processes as described with respect to figure 9 and provide control signals to the individual steerable wheel devices 31.

Therefore, this modular configuration also allows for the container being provided with a plurality of cargo transport platforms to be moved in a controlled and driven manner along a predetermined path and to a desired position, respectively, on the floor 23 of the cabin or a cargo hold of an aircraft.

### Reference numerals:

- 1: aircraft
- 3: fuselage
- 5: passenger cabin
- 7: cargo hold
- 9: cargo container
- 11, 11': cargo transport platform
- 13: base member
- 15: upper surface
- 17: bottom surface
- 19: support member
- 21: support surface
- 23: floor
- 25: casing
- 27: receiving space
- 29: lower surface
- 31: steerable wheel device
- 33: carrier
- 35: wheel assembly
- 37: first wheel
- 39: second wheel
- 41: wheel axis
- 43: steering axis
- 45: wedge member
- 47: wedge member
- 49: rod
- 51: lever
- 53: distal end
- 55: front end
- 57: shaft
- 59: first hub drive
- 61: second hub drive
- 63: control unit
- 65: first sensor element
- 67: second sensor element
- 69: connectors
- 71: dampening element
- 73: battery pack
- 75: GPS sensor
- 77: user interface
- 79: central unit

## Claims

1. A cargo transport platform for being received in an aircraft cargo hold (7) or cabin (5) comprising:
a base member (13) having an upper surface (15) configured to support cargo elements and a lower surface (29) adapted to face a floor surface of the cargo hold (7) or cabin (5),
a plurality of steerable wheel devices (31) supported in the base member (13) and adapted to allow the platform (11) to slide on the floor surface (23),
wherein each of the plurality of steerable wheel devices (31) comprises a carrier (33) and a wheel assembly (35), each wheel assembly (35) comprising at least one wheel (37, 39) which is rotatably supported in the carrier (33) about a wheel axis (41) and arranged such that it projects beyond the lower surface (29),
wherein for each of the steerable wheel devices (31) a steering axis(43) is defined about which the carrier (33) of said steerable wheel device (31) my rotate relative to the base member (13), each steering axis (43) extending vertically relative to the floor surface (23),
wherein each steerable wheel device (31) comprises a drive assembly (59, 61) wherein the drive assembly (59, 61) is adapted
to rotate the carrier (33) of said steerable wheel device (31) about its steering axis (43) and
to rotatingly drive the at least one wheel (37, 39) of the wheel assembly (35) of said steerable wheel device (31) about its wheel axis, and
a control unit connected to each of the drive assemblies and adapted to provide control signals to the drive assembly so as to effect movement of the platform along a predetermined path.

2. The cargo transport platform according to claim 1, wherein the wheel assembly (35) of each steerable wheel device (31) comprises a first and a second wheel (37, 39) being rotatably supported in the carrier (33) of said steerable wheel device (31) about its wheel axis (41),
wherein the drive assembly of each of the steerable wheel devices (31) comprises a first rotary drive (59) coupled to the first wheel (37) and a second rotary drive (61) coupled to the second wheel (39), and
wherein the control unit (63) is connected to the drive assembly such that the first and second rotary drives (59, 61) are operable in such a way that the rotational direction and rotational speed of each of the first and second wheels (37, 39) of each steerable wheel device (31) can be controlled independently.

3. The cargo transport platform according to claim 2, wherein the first and the second rotary drives (59, 61) of each of the steerable wheel devices (31) are formed as a hub drive.

4. The cargo transport platform according to one or more of claims 1 to 3, wherein the drive assembly of each of the steerable wheel devices (31) comprises a steering drive coupled to the base member (13) and the carrier (33) of said steerable wheel device (33) and adapted to rotate said carrier (33) about its steering axis (43).

5. The cargo transport platform according to claim 4, wherein the steering drive is formed as step motor.

6. The cargo transport platform according to one or more of the preceding claims, wherein in of each of the steerable wheel devices (31) a sensor assembly (65, 67) is provided which is adapted to detect
the position of the carrier (33) of said steerable wheel device (31) relative to the base member (13) and/or
the rotational position of the at least one wheel (37, 39) of the wheel assembly (35) of said steerable wheel device (31) and/or
the rotational speed of the at least one wheel (37, 39) of the wheel assembly (35) of said steerable wheel device (31), and
wherein the sensor assembly (65, 67) of each of the steerable wheel devices (31) is connected to the control unit (63) and capable of transmitting a signal to the control unit (63) representing
the position of the carrier (33) of said steerable wheel device (31) relative to the base member (13) and/or
the rotational position of the at least one wheel (37, 39) of the wheel assembly (35) of said steerable wheel device (31) and/or
the rotational speed of the at least one wheel (37, 39) of the wheel assembly (35) of said steerable wheel device (31).

7. The cargo transport platform according to one or more of the preceding claims, wherein a battery pack (73) is provided, which is preferably releasably mounted on the base member (13),
wherein the drive assembly of each of the steerable wheel devices (31) is adapted to be supplied by the battery pack (73).

8. The cargo transport platform according to one or more of the preceding claims, wherein the carrier (33) of each of the steerable wheel devices (31) is moveable relative to the base member (13) parallel to the steering axis (43) of said steerable wheel device (31) between
an extended position in which the at least one wheel (37, 39) of said steerable wheel device (31) extends beyond the lower surface (29) and
a retracted position in which the at least one wheel (37, 39) of said steerable wheel device (31) is retracted behind the lower surface (29).

9. The cargo transport platform according to one or more of the preceding claims, comprising a position sensor (79) connected to the control unit (63) and adapted to provide a signal representing the actual position of the platform (11) to the control unit (63).

10. The cargo transport platform according to one or more of the preceding claims, comprising a user interface (77) adapted to receive an input from a user specifying a target position and/or the predetermined path and/or a direction along which the platform (11) is to be moved by the steerable wheel devices (31).

11. A cargo transport system for being received in an aircraft cargo hold (7) or cabin (5) comprising
at least one cargo transport platform (11) according to one or more of the preceding claims and
a support member (19) having a support surface (21),
wherein the at least one cargo transport platform (11) is connected to the support member (19),
wherein the support member (19) being configured such that when the at least one wheel (37, 39) of the steerable wheel devices (31) of the at least one cargo transport platform (11) are positioned on a floor surface (23) of an aircraft cargo hold (7) or cabin (5), the support surface (23) may support cargo.

12. The cargo transport system according to claim 11, wherein the base member (13) of the at least one cargo transport platform (11) is releasably connected to the support member (19).

13. The cargo transport system according to claim 11, wherein the base member (13) of the at least one cargo transport platform (11) is connected to the support member (19) such, that the base member (13) and the support member (21) are integrally formed.

14. Method of operating a cargo transport platform of one or more of claims 1 to 10, comprising the following steps:
a) providing a control command to the control unit (63);
b) determining a predetermined path to be followed by the cargo transport platform (11) based on the control command by the control unit (63);
c) determining a rotational position of the carrier (33) and the velocity of the at least one wheel (37, 39) of each the steerable wheel devices (31) by the control unit (63) to obtain movement of the cargo transport platform (11) along the predetermined path;
d) providing control signals to the drive assemblies of each of the steerable wheel devices (31) corresponding to the rotational position and the velocity determined in step d) by the control unit (63); and
e) operating the drive assemblies of each of the steerable wheel devices (31) based on the control signals provided in step d).

15. Method according to claim 14, wherein the wheel assembly (35) of each steerable wheel device (31) comprises a first and a second wheel (37, 39) being rotatably supported in the carrier (33) of said steerable wheel device (31) about its wheel axis (41), wherein the drive assembly of each of the steerable wheel devices (31) comprises a first rotary drive (59) coupled to the first wheel (37) and a second rotary drive (61) coupled to the second wheel (39), and wherein the control unit (63) is connected to the drive assembly such that the first and second rotary drives (59, 61) are operable in such a way that the rotational direction and rotational speed of each of the first and second wheels (37, 39) of each steerable wheel device (31) can be controlled independently;
wherein in step d) the control signals are provided by the control unit (63) to the first and the second rotary drive (59, 61) of each of the steerable wheel devices (31); and
wherein in step e) the first and the second rotary drives (59, 61) of each of the steerable wheel devices (31) are operated based on the control signals provided in step d).
